# EUROPEAN PATENT APPLICATION

(11) **EP 4 036 847 A1**
(43) Date of publication of application: **03.08.2022**
(21) Application number: 19947325.7
(22) Date of filing: 27.09.2019
(51) Int. Cl.: G06T 7/00, G07C 9/00

(54) **INFORMATION PROCESSING DEVICE, TERMINAL DEVICE, INFORMATION PROCESSING SYSTEM, INFORMATION PROCESSING METHOD, AND RECORDING MEDIUM**

(71) Applicant: NEC Corporation, 108-8001 Tokyo (JP)
(72) Inventor: HAYASE, Noriaki, Tokyo 108-8001 (JP); YANO, Tatsuya, Tokyo 108-8001 (JP); NONAKA, Tetsushi, Tokyo 108-8001 (JP); KUJIRAI, Hiroaki, Tokyo 108-8001 (JP)
(74) Representative: Betten & Resch
(86) International application number: PCT/JP2019/038407
(87) International publication number: WO 2021/059537

(57) **Abstract**

An information processing apparatus according to the present invention includes: a detection unit that detects biometric information of a person from a captured image being input; a first determination unit that determines, based on the captured image, whether or not a condition for starting a determination process of whether or not the person is permitted to pass through a gate is satisfied; a matching unit that matches the biometric information with a registered biometric information in parallel with the process of the first determination unit; and a second determination unit that executes the determination process based on a determination result by the first determination unit and a matching result by the matching unit.

## Description

### [Technical field]

The present invention relates to an information processing apparatus, a terminal device, an information processing system, an information processing method, and a storage medium.

### [Background Art]

Patent Literature 1 discloses a face authentication system for authenticating a person who moves in an authentication area set in the vicinity of a gate to determine whether or not the person is permitted to pass through the gate.

### [Citation List]

### [Patent Literature]

PTL 1: Japanese Patent Laid-Open No. 2015-1790

### [Summary of Invention]

### [Technical Problem]

The system described in Patent Literature 1 determines whether or not to open the gate based on the position and size of the face of the person in the captured image after the face image of the person captured in the authentication area is matched with a registered face image registered in advance in the database. Since it is necessary to complete the matching process and the determination processing in order while the person is moving in the direction to the gate, there is a possibility that the gate cannot be opened in time when, for example, the person is moving at a high speed. In other words, it is difficult to permit a person to pass through the gate at an appropriate timing while the person is moving.

Therefore, an object of the present invention is to provide an information processing apparatus, a terminal device, an information processing system, an information processing method, and a recording medium that permit a person to pass through a gate at an appropriate timing while the person is moving.

### [Solution to Problem]

According to one aspect of the present invention, there is provided an information processing apparatus including: a detection unit that detects biometric information of a person from a captured image being input; a first determination unit that determines, based on the captured image, whether or not a condition for starting a determination process of whether or not the person is permitted to pass through a gate is satisfied; a matching unit that matches the biometric information with a registered biometric information in parallel with the process of the first determination unit; and a second determination unit that executes the determination process based on a determination result by the first determination unit and a matching result by the matching unit.

According to another aspect of the present invention, there is provided a terminal device including: a detection unit that detects biometric information of a person from a captured image being input; a first output unit that outputs the biometric information to a matching apparatus that matches the biometric information with a registered biometric information; a determination unit that determines, based on the captured image, whether or not a condition for starting a determination process of whether or not the person is permitted to pass through a gate is satisfied; and a second output unit that outputs a determination result by the determination unit to a determination apparatus that executes the determination process based on the determination result and a matching result by a matching apparatus executed in parallel with the process of the determination unit.

According to yet another aspect of the present invention, there is provided an information processing system including: a first determination apparatus that detects biometric information of a person from a captured image being input and determines, based on the captured image, whether or not a condition for starting a determination process of whether or not the person is permitted to pass through a gate is satisfied; a matching apparatus that matches the biometric information with a registered biometric information in parallel with the process of the first determination apparatus; and a second determination apparatus that executes the determination process based on a determination result by the first determination apparatus and a matching result by the matching apparatus.

According to yet another aspect of the present invention, there is provided an information processing method including: detecting biometric information of a person from a captured image being input; executing a condition determining process of determining, based on the captured image, whether or not a condition for starting a passage determination process of whether or not the person is permitted to pass through a gate is satisfied; executing matching process of matching the biometric information with a registered biometric information in parallel with the condition determining process; and executing the passage determination process based on a result of the condition determining process and a result of the matching process.

According to yet another aspect of the present invention, there is provided an information processing method including: detecting biometric information of a person from a captured image being input; outputting the biometric information to a matching apparatus that matches the biometric information with a registered biometric information; executing a condition determining process of determining, based on the captured image, whether or not a condition for starting a passage determination process of whether or not the person is permitted to pass through a gate is satisfied; outputting a determination result of the condition determination process to the determination apparatus that executes the passage determination process based on the determination result of the condition determination process and a matching result of the matching process in the matching apparatus, that is executed in parallel with the condition determination process.

According to yet another aspect of the present invention, there is provided a storage medium storing a program that causes a computer to execute: detecting biometric information of a person from a captured image being input; executing a condition determining process of determining, based on the captured image, whether or not a condition for starting a passage determination process of whether or not the person is permitted to pass through a gate is satisfied; executing matching process of matching the biometric information with a registered biometric information in parallel with the condition determining process; and executing the passage determination process based on a result of the condition determining process and a result of the matching process.

### [Advantageous Effects of Invention]

According to the present invention, there are provided an information processing apparatus, a terminal device, an information processing system, an information processing method, and a storage medium which permit a person to pass through a gate at an appropriate timing while the person is moving.

### [Brief Description of Drawings]

[FIG. 1] FIG. 1 is a block diagram illustrating an example of the overall configuration of a walk-through biometric authentication system according to a first example embodiment.
[FIG. 2] FIG. 2 is an image diagram of a person authentication process according to the first example embodiment.
[FIG. 3] FIG. 3 is a diagram illustrating an example of registrant data stored in a storage unit according to the first example embodiment.
[FIG. 4] FIG. 4 is a diagram illustrating an example of authenticated person data stored in a storage unit according to the first example embodiment.
[FIG. 5] FIG. 5 is a block diagram illustrating an example of a hardware configuration of a management server according to the first example embodiment.
[FIG. 6] FIG. 6 is a sequence diagram illustrating an example of a process of the management server according to the first example embodiment.
[FIG. 7] FIG. 7 is a diagram illustrating an example of setting a trigger determination area according to the first example embodiment.
[FIG. 8] FIG. 8 is a diagram for explaining the relation of an interocular distance with the front-rear position of a person according to the first example embodiment.
[FIG. 9] FIG. 9 is a block diagram illustrating an example of the overall configuration of a walk-through biometric authentication system according to a second example embodiment.
[FIG. 10] FIG. 10 is a sequence diagram illustrating an example of a walk-through biometric system process according to the second example embodiment.
[FIG. 11] FIG. 11 is a block diagram illustrating a configuration of an information processing apparatus according to a third example embodiment.
[FIG. 12] FIG. 12 is a block diagram illustrating a configuration of a terminal device according to a fourth example embodiment.
[FIG. 13] FIG. 13 is a block diagram illustrating a configuration of an information processing system according to a fifth example embodiment.

### [Description of Embodiments]

Illustrative example embodiments of the present invention will be described below with reference to the drawings. Throughout the drawings, the same components or corresponding components are labeled with the same references, and the description thereof may be omitted or simplified.

### [First example embodiment]

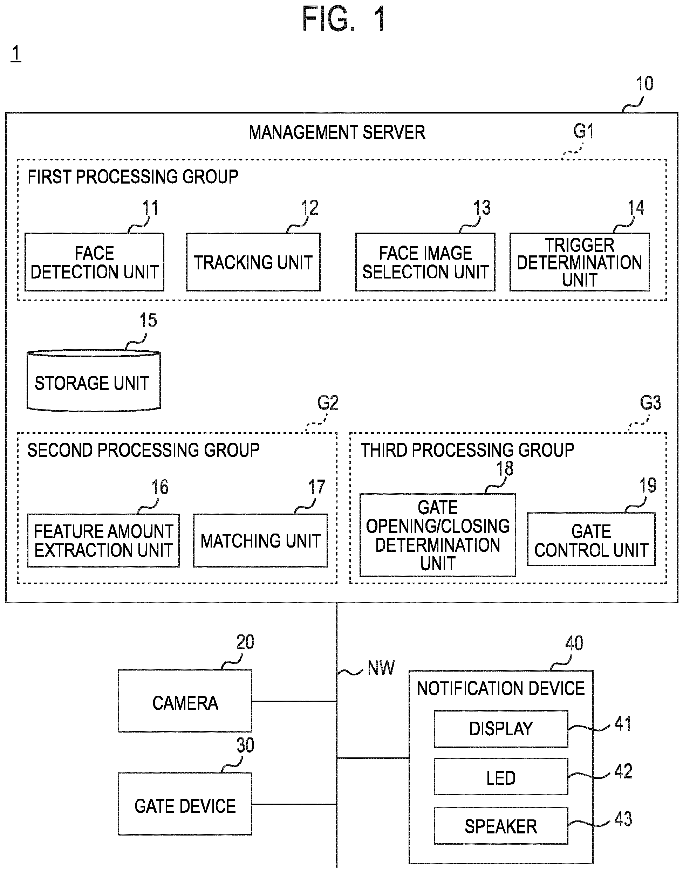

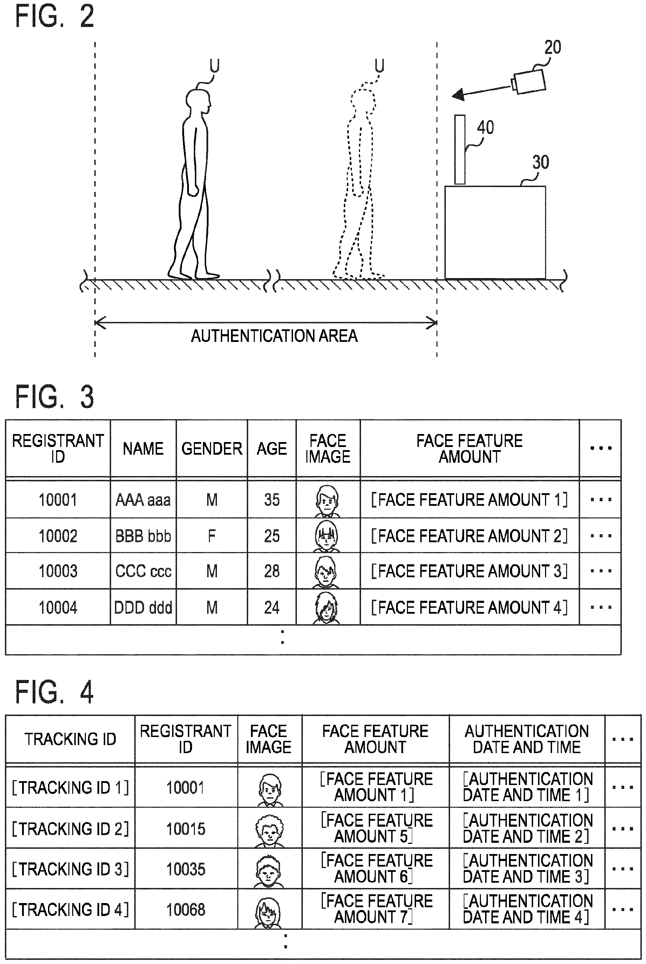

First, the configuration of the walk-through biometric authentication system 1 according to the present example embodiment will be described with reference to the drawings. FIG. 1 is a block diagram illustrating an example of the overall configuration of the walk-through biometric authentication system 1 according to the present example embodiment. FIG. 2 is an image diagram illustrating the authentication process of a person (user U) according to the present example embodiment. The walk-through biometric authentication system 1 is an information processing system in which a management server 10, a camera 20, a gate device 30, and a notification device 40 are connected via a network NW such as a local area network (LAN) or the Internet.

The walk-through biometric authentication system 1 according to the present example embodiment can be applied to, for example, identity confirmation for entry and departure at an airport, identity confirmation at an administrative institution, identity confirmation for entry and exit at a factory or office, identity confirmation for entry and exit at an event venue, and the like.

The management server 10 is an information processing apparatus that biometrically authenticates whether or not the user U detected from the captured image is a registrant registered in the database in advance and determines whether or not the user U can pass through the gate based on the authentication result.

The camera 20 is, for example, a capturing device such as a security camera installed in an arbitrary number in an authentication area of a facility, and sequentially transmits the captured image data to the management server 10. A digital camera using a complementary metal oxide semiconductor (CMOS) image sensor, a charge coupled device (CCD) image sensor or the like can be used as the camera 20 so as to be suitable for image processing after capturing. The camera 20 may include a light source for irradiating illumination light toward the user U. In FIG. 1, the camera 20 is wired to the management server 10 via the network NW, but the connection method is not limited to wired connection. The camera 20 may be wirelessly connected to the management server 10.

When the identity confirmation of the user U in the management server 10 is successful, the gate device 30 transits from a closed state in standby for blocking the passage of the user U to an open state for permitting the passage of the user U under the control of the management server 10 (the gate control unit 19). The opening/closing system of the gate device 30 is not particularly limited, and is, for example, a flapper gate in which a flapper provided from one side or both sides of a passage is opened and closed, a turn-style gate in which three bars rotate, and the like.

The notification device 40 transmits various kinds of notification to the user U and calls attention based on the notification control information from the management server 10. The notification device 40 includes a display 41, an LED 42 and a speaker 43.

The display 41 displays a face image and a text message of the user U in a display area to notify that the user is a person to be determined whether the user can pass through the gate. The LED 42 notifies the possibility of passing through the gate by switching the lighting/non-lighting and the lighting color. For example, the LED 42 can notify that, when the lighting color is green, the user is allowed to pass, when the lighting color is yellow, the user is under the determination process, and when the lighting color is red, the user is not allowed to pass.

The speaker 43 outputs an alarm sound and a guide sound to the user U moving in the authentication area in order to enhance the accuracy of face authentication. For example, it is preferable to output guidance voices such as "Look at the camera whose light is ON" and "Please shift your gaze slightly to the right".

As illustrated in FIG. 1, the management server 10 includes a face detection unit 11, a tracking unit 12, a face image selection unit 13, a trigger determination unit 14, a storage unit 15, a feature amount extraction unit 16, a matching unit 17, a gate opening/closing determination unit 18, and a gate control unit 19. In this example, each unit other than the storage unit 15 is classified into the first processing group G1, the second processing group G2, and the third processing group G3 by the broken line unit.

The first processing group G1 is a module that determines whether or not a trigger condition for starting gate passage determination process is satisfied in the third processing group G3. The first processing group G1 includes the face detection unit 11, the tracking unit 12, the face image selection unit 13, and the trigger determination unit 14.

The second processing group G2 is a module that executes biometric authentication of the user U in parallel with the first processing group. The second processing group G2 includes the feature amount extraction unit 16 and the matching unit 17.

The third processing group G3 is a module that executes gate passage determination process based on two processing results in the first processing group G1 and the second processing group G2. The third processing group G3 includes the gate opening/closing determination unit 18 and the gate control unit 19.

The storage unit 15 stores various data necessary for the operation of the management server 10. For example, the storage unit 15 stores registrant data of a plurality of persons (registrants) having the right of passage to the management area, tracking data including a tracking ID issued to each person detected from the captured image, authenticated person data of the user U (authenticated person) authenticated as the registrant by the face matching, and the like.

FIG. 3 is a diagram illustrating an example of registrant data stored in the storage unit 15. The registrant data includes a registrant ID for identifying the registrant, attribute information (name, age, gender, etc.) of the registrant, a face image and a face feature amount in data items. The face feature amount is an amount illustrating a feature of the face such as a position of a characteristic part such as a pupil, a nose, and a mouth end, and is extracted from the face image. The biometric information is not limited to the face image and the face feature amount.

FIG. 4 is a diagram illustrating an example of the authenticated person data stored in the storage unit 15. The authenticated person data includes a tracking ID, the registrant ID, the face image, the face feature amount, and an authentication date and time as data items. The tracking ID is an identifier assigned to each person detected from the captured image by the tracking unit 12. In a plurality of captured images acquired continuously, the same tracking ID is given to a user U regarded as the same person. The authentication date and time is a time stamp when the user U is authenticated as a registrant in the second processing group G2. The management server 10 (the gate opening/closing determination unit 18) in the present example embodiment determines whether the user is permitted to pass through the gate based on the relation of the authentication date with time of biometric authentication stored in a storage unit 15 and a time stamp included in a request for activating the trigger. The functions of the components other than the storage unit 15 will be described in detail later.

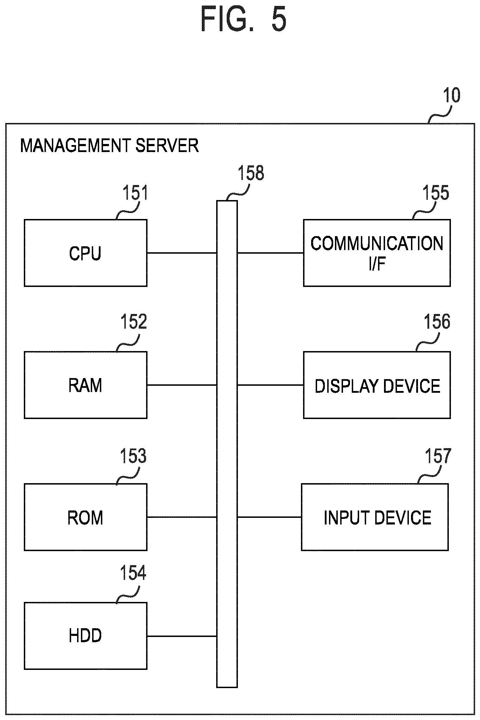

FIG. 5 is a block diagram illustrating an example of the hardware configuration of the management server 10 according to the present example embodiment. The management server 10 includes a central processing unit (CPU) 151, a random access memory (RAM) 152, a read only memory (ROM) 153, and a hard disk drive (HDD) 154 as computers for performing calculation, control, and storage. The management server 10 includes a communication interface (I/F) 155, a display device 156, and an input device 157. The CPU 151, the RAM 152, the ROM 153, the HDD 154, the communication I/F 155, the display device 156, and the input device 157 are connected to each other via the bus line 158. The display device 156 and the input device 157 may be connected to the bus line 158 via a driving device (not illustrated) for driving these devices.

The CPU 151 is a processor that performs predetermined operations according to programs stored in the ROM 153, the HDD 154, and the like, and has a function of controlling each part of the management server 10. The RAM 152 comprises a volatile storage medium and provides a temporary memory area necessary for the operation of the CPU 151. The ROM 153 is composed of a nonvolatile storage medium and stores necessary information such as a program used for the operation of the management server 10. The HDD 154 is a storage device composed of a nonvolatile storage medium and stores data necessary for processing, an operation program of the management server 10, and the like.

The communication I/F 155 is a communication interface based on standards such as Ethernet (registered trademark), Wi-Fi (registered trademark), and 4G, and is a module for communicating with other devices. The display device 156 is a liquid crystal display, an OLED display, etc., and is used for displaying images, characters, interfaces, etc. The input device 157 is a keyboard, a pointing device, or the like, and is used by the user to operate the management server 10. Examples of the pointing device include a mouse, a trackball, a touch panel, a pen tablet, and the like. The display device 156 and the input device 157 may be integrally formed as a touch panel.

The CPU 151 loads programs stored in the ROM 153, the HDD 154 and the like into the RAM 152 and executes them. Thus, the CPU 151 realizes the functions of the face detection unit 11, the tracking unit 12, the face image selection unit 13, the trigger determination unit 14, the feature amount extraction unit 16, the matching unit 17, the gate opening/closing determination unit 18, and the gate control unit 19.

Note that the hardware configuration illustrated in FIG. 5 is an example, and other devices may be added or some devices may not be provided. Some devices may be replaced with other devices having similar functions. Furthermore, some of the functions of the present example embodiment may be provided by other devices via the network NW, and the functions of the present example embodiment may be implemented by being distributed among a plurality of devices. For example, the HDD 154 may be replaced with a solid state drive (SSD) using a semiconductor memory, or may be replaced with a cloud storage.

Next, the operation of the walk-through biometric authentication system 1 configured as described above will be described with reference to the drawings.

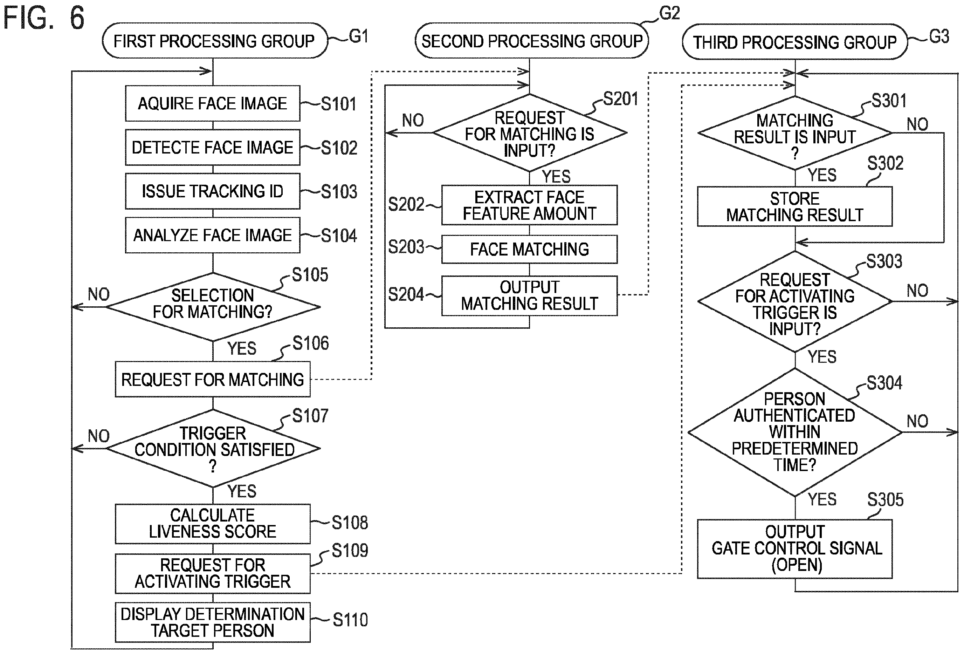

FIG. 6 is a sequence diagram illustrating an example of a process of the management server 10. The process of the first processing group G1, the second processing group G2, and the third processing group G3 in the management server 10 are executed in parallel.

First, the process of the first processing group G1 in the management server 10 will be described. When the management server 10 (the face detection unit 11) acquires a captured image from the camera 20 (step S101), the management server 10 detects the face images of all the persons included in the captured image (step S102).

Next, the management server 10 (the tracking unit 12) issues a unique tracking ID for each detected person (step S103). When the captured image is acquired continuously, the tracking unit 12 in the present example embodiment determines whether or not the person is the same person based on the position of the person in the captured image. Then, the tracking unit 12 gives the same tracking ID when it is regarded as the same person. Thus, the tracking unit 12 tracks the same person over a plurality of captured images.

Next, the management server 10 (the face image selection unit 13) analyzes the position of the person in the captured image, the direction of the face of the person in the face image, the sharpness, the brightness, the size of the display area of the predetermined area, and the like (step S104).

Next, the management server 10 (the face image selection unit 13) determines whether or not to select the analyzed face image for matching in the second processing group G2 (step S105). Specifically, the face image selection unit 13 selects a face image to be used for matching from among the plurality of face images (biometric information) detected by the face detection unit 11, based on at least one of the direction, sharpness, brightness, and display area of the feature extraction portion of the person in the face image, and outputs the selected face image to the matching unit 17. When the management server 10 (the face image selection unit 13) determines that the face image to be used for matching is selected (step S105: YES), the process proceeds to step S106.

On the other hand, when the management server 10 (the face image selection unit 13) determines that the face image to be used for matching is not selected (step S105: NO), the process returns to the step S101. For example, when the face of the person in the captured image does not face the front, the face image is regarded as an inappropriate image to be used for matching, and the face image is not selected. Similarly, when (A) matching is regarded as an unnecessary based on position of persons in the captured image, (B) the brightness of the face image is low, or (C) the body part (feature extraction part) from which the feature amount is extracted is covered with a shield (for example, a mask), the face image of the person is not selected.

In the step S106, the management server 10 (the face image selection unit 13) outputs a request for matching of the face image to the second processing group G2. The request for matching (request data) includes a face image of the person and a tracking ID. When face images of a plurality of persons are selected from the captured images, the request for matching is outputted for each person.

Next, the management server 10 (the trigger determination unit 14) determines whether or not each person included in the captured image satisfies a predetermined trigger condition (step S107). In the present example embodiment, the trigger condition in the trigger determination unit 14 is set based on a body size that is the size or length of a predetermined body part of a person in the captured image. As the body size, the distance between two eyes of a person (hereinafter referred to as "interocular distance") is used. The trigger determination unit 14 determines that the trigger condition is satisfied for a person when the interocular distance of the person whose face image is detected in the captured image is longest and the interocular distance satisfies a predetermined threshold.

When the management server 10 (the trigger determination unit 14) determines that each person included in the captured image satisfies a predetermined trigger condition (step S107: YES), the process proceeds to step S108. On the other hand, when the management server 10 (the trigger determination unit 14) determines that each person included in the captured image does not satisfy the predetermined trigger condition (step S107: NO), the process returns to the step S101.

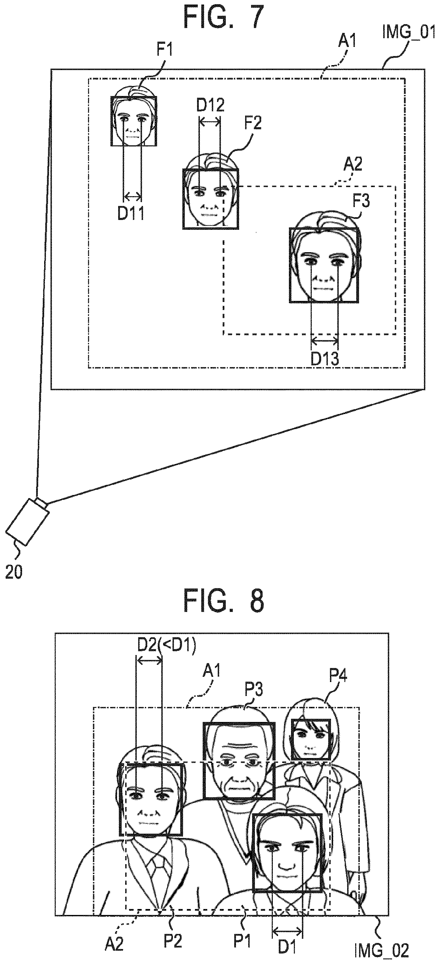

FIG. 7 is diagram illustrating an example of setting a trigger determination area A2 in the captured image IMG_01. Here, an area (hereinafter referred to as the "matching area") A1 for detecting a face image to be used for matching is set inside the captured image IMG_01. Further, an area (hereinafter referred to as "trigger determination area") A2 for determining whether or not the trigger condition is satisfied is set inside the matching area A1. The matching area A1 and the trigger determination area A2 can be arbitrarily set based on the position of the camera 20 in the authentication area, the moving direction of the user U, and the like.

Reference numerals F1 to F3 denote the face images of the same person sequentially detected from the consecutive captured images IMG_01. It is assumed that the face images F1 to F3 are detected in the order of the face image F1, the face image F2, and the face image F3. Reference numerals D11 to D13 denote intervals (interocular distance) between two eyes in each of the face images F1 to F3.

FIG. 7 illustrates that the camera 20 is shooting from the left oblique upward direction with respect to the authentication area. Therefore, the trigger determination area A2 is set to the lower right of the captured image IMG_01. The face image F1 illustrates when the person is at the furthest position from the camera 20. Since the face image F1 is included in the matching area A1, the face image F1 is a target for matching process. Next, when the person moves in the authentication area in the direction of the gate, the face image F2 can be detected. At this time, the interocular distance of the person is D12, which is longer than the interocular distance D11 in the face image F1. Since the face image F2 is included in the matching area A1, the face image F2 is a target for matching process. However, the face image F2 includes only a part of the face in the trigger determination area A2. Therefore, the face image F2 is not a target for the trigger determination process.

When the person moves in the authentication area in the direction of the gate, the face image F3 can be detected. At this time, the interocular distance of the person is D13, which is longer than the interocular distance D12 in the face image F2. The face image F3 includes the entire face in the matching area A1 and the trigger determination area A2. Therefore, the face image F3 is a target for the request for matching and the request for activating the trigger. Thus, by setting the matching area A1 and the trigger determination area A2 inside the captured image IMG_01, it is possible to efficiently perform the selection process of matching image and the trigger determination process for only the person who approaches the gate.

FIG. 8 is a diagram for explaining the relation of the interocular distance of the person with the front-rear position. Here, four persons P1 to P4 are detected from the captured image IMG_02. The persons P1 to P4 are included in the matching area A1. The trigger determination area A2 includes two persons, that is the person P1 and the person P2. In such a case, the interocular distance is compared between persons included in the trigger determination area A2. In FIG. 8, since D1 is the interocular distance of the person P1 and D2 is the interocular distance of the person P2, the interocular distance D1 is longer than the interocular distance D2. By comparing the interocular distance, it can be determined that the person P1 is in front of the person P2. When the interocular distance D1 of the person P1 is longer than a predetermined threshold, the management server 10 (the trigger determination unit 14) regards the person as a person who satisfies the trigger condition and outputs a request for activating the trigger regarding the person P1.

In the step S108, the management server 10 (the trigger determination unit 14) calculates a liveness score for the person who satisfies the trigger condition.

Next, the management server 10 (the trigger determination unit 14) outputs the request for activating the trigger to the third processing group G3 (step S109). The request for activating the trigger is data including the tracking ID of the person and the liveness score.

Next, when the management server 10 (the trigger determination unit 14) transmits a control signal for displaying on a screen a determination target person of gate passage permission/rejection who satisfies the trigger condition (step S110) to the notification device 40, the process returns to the step S101.

Next, the process of the second processing group G2 in the management server 10 will be described. The management server 10 (the feature amount extraction unit 16) determines whether or not the request for matching has been input from the first processing group G1 (step S201).

When the management server 10 (the feature amount extraction unit 16) determines that the request for matching has been input from the first processing group G1 (step S201: YES), the process proceeds to step S202. On the other hand, when the management server 10 (the feature amount extraction unit 16) determines that the request for matching has not been input from the first processing group G1 (step S201: NO), the standby state is maintained.

In the step S202, the management server 10 (the feature amount extraction unit 16) extracts the face feature amount from the face image included in the request for matching (request data) input from the first processing group G1.

Next, the management server 10 (the matching unit 17) performs face matching of the input face image with the registered face image (registered biometric information) of the registrant stored in the storage unit 15 in advance (step S203) .

When the management server 10 (the matching unit 17) outputs a matching result to the third processing group G3 (the gate opening/closing determination unit 18) (step S204), the process returns to the step S201.

Finally, the process in the third processing group G3 of the management server 10 will be described. The management server 10 (the gate opening/closing determination unit 18) determines whether or not matching result data has been input from the second processing group G2 (step S301).

When the management server 10 (the gate opening/closing determination unit 18) determines that the matching result data has been input from the second processing group G2 (step S301: YES), the process proceeds to step S302. On the other hand, when the management server 10 (the gate opening/closing determination unit 18) determines that the matching result data has not been input from the second processing group G2 (step S301: NO), the process proceeds to step S303.

In the step S302, the management server 10 (the gate opening/closing determination unit 18) stores the matching result input from the second processing group G2 in the storage unit 15. In the present example embodiment, data relating to a person (authenticated person) whose matching result indicates "matched" is stored in the storage unit 15 as authenticated person data (see FIG. 4).

In the step S303, the management server 10 (the gate opening/closing determination unit 18) determines whether a request for activating the trigger from the first processing group G1 has been input. When the management server 10 (the gate opening/closing determination unit 18) determines that the request for activating the trigger from the first processing group G1 has been input (step S303: YES), the process proceeds to step S304.

On the other hand, when the management server 10 (the gate opening/closing determination unit 18) determines that the request for activating the trigger from the first processing group G1 has not been input (step S303: NO), the process returns to step the S301.

In the step S304, the management server 10 (the gate opening/closing determination unit 18) determines whether or not the person who satisfies the trigger condition is a person who has been authenticated within a predetermined time. When the management server 10 (the gate opening/closing determination unit 18) determines that the person who satisfies the trigger condition is a person authenticated within a predetermined time period (step S304: YES), the process proceeds to step S305.

For example, a case will be described in which, for the same person whose tracking ID is "0001", T1 is the processing time when the trigger determination unit 14 determines that the trigger condition is satisfied, and T2 is the processing time when matching unit 17 authenticates that the person is matched with the registrant. The processing time T1 can be acquired from the timestamp of the request for activating the trigger. On the other hand, the processing time T2 can be acquired from the time stamp (authentication time) of the authenticated person data. In this case, when the processing time (authentication time) T2 is within a predetermined time from the processing time (trigger activation time) T1, the gate opening/closing determination unit 18 determines to open the gate.

On the other hand, when the management server 10 (the gate opening/closing determination unit 18) determines that the person who satisfies the trigger condition is not a person authenticated within the predetermined time period (step S304: NO), the process returns to the step S301.

In the step S305, when the management server 10 (the gate control unit 19) outputs a gate control signal for opening the gate to the gate device 30, the process returns to the step S301.

As described above, according to the present example embodiment, the process of the first processing group G1, the second processing group G2, and the third processing group G3 in the management server 10 are executed in parallel. Therefore, it is determined, at an appropriate timing, whether or not the user U is permitted to pass through the gate, and the opening/closing of the gate can be controlled based on the determination result.

### [Second example embodiment]

The walk-through biometric authentication system 2 according to the second example embodiment will be described below. Reference numerals that are common to the reference numerals denoted in the drawings of the first example embodiment indicate the same objects. Description of portions common to the first example embodiment will be omitted, and portions different from the first example embodiment will be described in detail.

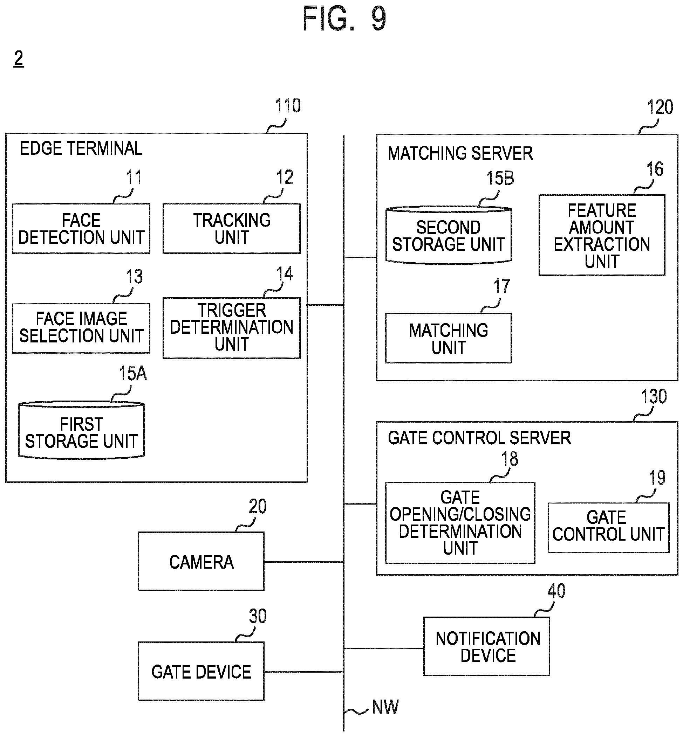

FIG. 9 is a block diagram illustrating an example of the overall configuration of the walk-through biometric authentication system 2 according to the present example embodiment. As illustrated in FIG. 1, the walk-through biometric authentication system 2 differs from that of the first example embodiment in that the functions of the management server 10 illustrated in FIG. 1 are distributed three devices consist of an edge terminal 110, a matching server 120, and a gate control server 130.

The storage unit 15 illustrated in FIG. 1 is divided into a first storage unit 15A and a second storage unit 15B. The first storage unit 15A stores tracking person data including a tracking ID about a tracking target person detected from a captured image and position information in the image. On the other hand, the second storage unit 15B stores registrant data (see FIG. 3) and authenticated person data (see FIG. 4).

Next, the operation of the walk-through biometric authentication system 2 configured as described above will be described with reference to the drawings.

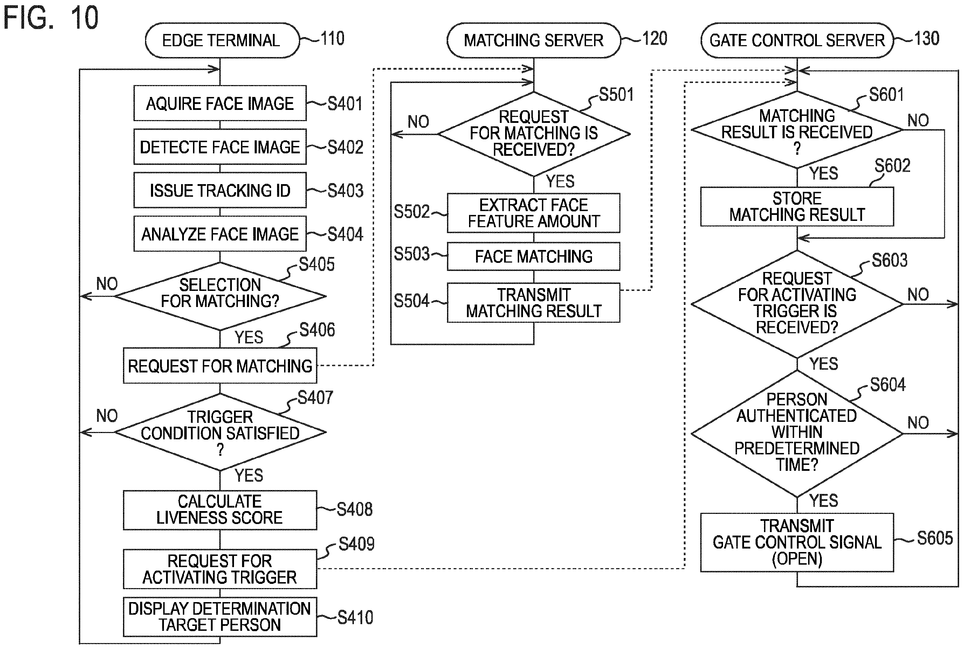

FIG. 10 is a sequence diagram illustrating an example of the processes of the walk-through biometric authentication system 2. The processes of the edge terminal 110, the matching server 120, and the gate control server 130 are executed in parallel.

First, the processes of the edge terminal 110 will be described. When the edge terminal (the face detection unit 11) acquires a captured image from the camera 20 (step S401), the edge terminal 110 detects the face images of all persons included in the captured image (step S402).

Next, the edge terminal 110 (the tracking unit 12) issues a unique tracking ID for each detected person (step S403). When a captured image is continuously acquired, the tracking unit 12 in the present example embodiment determines whether or not the person is the same person based on the position of the person in the captured image. Then, the tracking unit 12 gives the same tracking ID when it is regarded as the same person.

Next, the edge terminal 110 (the face image selection unit 13) analyzes the position of the person in the captured image, the direction of the face of the person in the face image, the sharpness, the brightness, the size of the display area of the predetermined area, and the like (step S404).

Next, the edge terminal 110 (the face image selection unit 13) determines whether or not to select the analyzed face image as an image to be used for matching in the matching server 120 (step S405). When the management server 10 (the face image selection unit 13) determines that the face image to be used for matching is selected (step S405: YES), the process proceeds to step S406.

On the other hand, when the edge terminal 110 (the face image selection unit 13) determines that the face image to be used for matching is not selected (step S405: NO), the process returns to the step S401.

In the step S406, the edge terminal 110 (the face image selecting unit 13) transmits a request for matching of a face image to the matching server 120. The request for matching (request data) includes a face image of the person and the tracking ID. When face images of a plurality of persons are selected from the captured images, the request for matching is made for each person.

Next, the edge terminal 110 (the trigger determination unit 14) determines whether or not each person included in the captured image satisfies a predetermined trigger condition (step S407). In the present example embodiment, when the interocular distance of the person whose face image is detected in the captured image is longest and the interocular distance satisfies a predetermined threshold, the trigger determination unit 14 determines that the trigger condition is satisfied.

When the edge terminal 110 (the trigger determination unit 14) determines that each person included in the captured image satisfies the predetermined trigger condition (step S407: YES), the process proceeds to step S408. On the other hand, when the edge terminal 110 (the trigger determination unit 14) determines that each person included in the captured image does not satisfy the predetermined trigger condition (step S407: NO), the process returns to the step S401.

In the step S408, the edge terminal 110 (the trigger determination unit 14) calculates a liveness score for the person who satisfies the trigger condition.

Next, the edge terminal 110 (the trigger determination unit 14) transmits a request for activating the trigger to the gate control server 130 (step S409). The request for activating the trigger is data including the tracking ID of the person and the liveness score.

Next, when the edge terminal 110 (the trigger determination unit 14) transmits a control signal for displaying on the screen a determination target person of gate passage permission/rejection who satisfies the trigger condition to the notification device 40 (step S410), the process returns to the step S401.

Next, the processes of the matching server 120 in the management server 10 will be described. The management server 10 (the feature amount extraction unit 16) determines whether or not a request for matching has been received from the edge terminal 110 (step S501).

When the matching server 120 (the feature amount extraction unit 16) determines that the request for matching has been received from the edge terminal 110 (step S501: YES), the process proceeds to step S502. On the other hand, when matching server 120 (the feature amount extraction unit 16) determines that the request for matching has not been received from the edge terminal 110 (step S501: NO), the standby state is maintained.

In the step S502, the matching server 120 (the feature amount extraction unit 16) extracts the face feature amount from the face image included in the request for matching (request data) received from the edge terminal 110.

Next, the matching server 120 (the matching unit 17) performs face matching of the received face image and the registered face image (registered biometric information) of the registrant stored in advance in the second storage unit 15B (step S503).

When the matching server 120 (the matching unit 17) transmits a matching result to the gate control server 130 (the gate opening/closing determination unit 18) (step S504), the process returns to the step S501.

Finally, the processes in the gate control server 130 will be described. The gate control server 130 (the gate opening/closing determination unit 18) determines whether or not the matching result data has been received from the matching server 120 (step S601).

When the gate control server 130 (the gate opening/closing determination unit 18) determines that matching result data has been received from the matching server 120 (step S601: YES), the process proceeds to step S602. On the other hand, when the management server 10 (the gate opening/closing determination unit 18) determines that the matching result data has not been received from matching server 120 (step S601: NO), the process proceeds to step S603.

In the step S602, the gate control server 130 (the gate opening/closing determination unit 18) stores the matching result received from the matching server 120 in the storage area. In the present example embodiment, data relating to a person (authenticated person) whose matching result indicates "matched" is stored as authenticated person data in the second storage unit 15B of the matching server 120 and in the storage area of the gate control server 130 (see FIG. 4).

In the step S603, the gate control server 130 (the gate opening/closing determination unit 18) determines whether a request for activating the trigger from the edge terminal 110 has been received. When the gate control server 130 (the gate opening/closing determination unit 18) determines that a request for activating the trigger has been received from the edge terminal 110 (step S603: YES), the process proceeds to step S604.

On the other hand, when the gate control server 130 (the gate opening/closing determination unit 18) determines that the request for activating the trigger from the edge terminal 110 has not been received (step S603: NO), the process returns to the step S601.

In the step S604, the gate control server 130 (the gate opening/closing determination unit 18) determines whether or not the person who satisfies the trigger condition is a person who has been authenticated within a predetermined time. When the management server 10 (the gate opening/closing determination unit 18) determines that the person who satisfies the trigger condition is a person authenticated within a predetermined time period (step S604: YES), the process proceeds to step S605.

On the other hand, when the gate control server 130 (the gate opening/closing determination unit 18) determines that the person who satisfies the trigger condition is a person authenticated within a predetermined time period (step S604: NO), the process returns to the step S601.

In the step S605, when the gate control server 130 (the gate control unit 19) transmits a gate control signal for opening the gate to the gate device 30, the process returns to the step S601.

As described above, according to the present example embodiment, the processes of the edge terminal 110, the matching server 120, and the gate control server 130 are executed in parallel. Therefore, as in the case of the first example embodiment, it is determined, at an appropriate timing, whether or not the user U is permitted to pass through the gate, and the opening/closing of the gate can be controlled based on the determination result.

### [Third example embodiment]

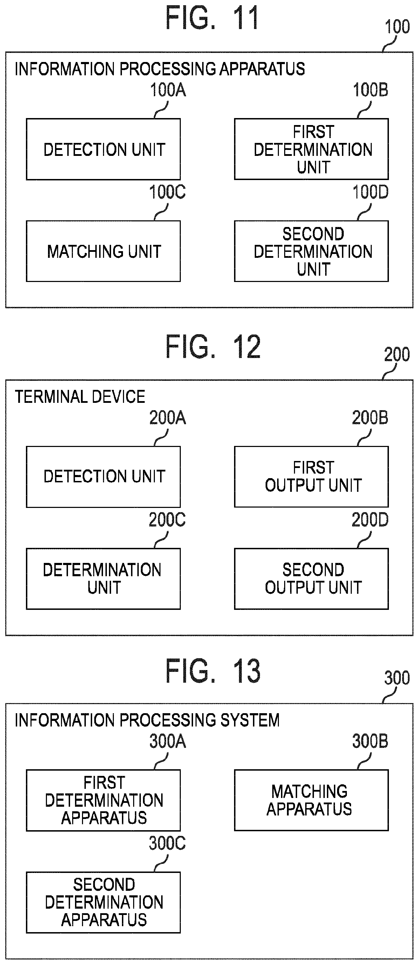

FIG. 11 is a block diagram illustrating the configuration of the information processing apparatus 100 according to the third example embodiment. The information processing apparatus 100 includes a detection unit 100A, a first determination unit 100B, a matching unit 100C, and a second determination unit 100D. The detection unit 100A detects biometric information of a person from a captured image being input. The first determination unit 100B determines, based on the captured image, whether or not a condition for starting a determination process of whether or not the person is permitted to pass through a gate is satisfied. The matching unit 100C matches the biometric information with a registered biometric information in parallel with the process of the first determination unit 100B. The second determination unit 100D executes the determination process based on a determination result by the first determination unit 100B and a matching result by the matching unit 100C. According to the present example embodiment, a person can be permitted at an appropriate timing to pass through a gate while the person is moving.

### [Fourth example embodiment]

FIG. 12 is a block diagram illustrating the configuration of the terminal device 200 according to the fourth example embodiment. The terminal device 200 includes a detection unit 200A, a first output unit 200B, a determination unit 200C, and a second output unit 200D. The detection unit 200A detects biometric information of a person from a captured image being input. The first output unit 200B outputs the biometric information to a matching apparatus that matches the biometric information with a registered biometric information. The determination unit 200C determines, based on the captured image, whether or not a condition for starting a determination process of whether or not the person is permitted to pass through a gate is satisfied. The second output unit 200D outputs the determination result to a determination apparatus that executes the determination process based on the determination result by the determination unit 200C and a matching result by a matching apparatus executed in parallel with the process of the determination unit 200C. According to the present example embodiment, a person can be permitted at an appropriate timing to pass through a gate while the person is moving.

### [Fifth example embodiment]

FIG. 13 is a block diagram illustrating the configuration of the information processing system 300 according to the fifth example embodiment. The information processing system 300 includes a first determination apparatus 300A, a matching apparatus 300B, and a second determination apparatus 300C. The first determination apparatus 300A detects biometric information of a person from a captured image being input and determines, based on the captured image, whether or not a condition for starting a determination process of whether or not the person is permitted to pass through a gate is satisfied. The matching apparatus 300B matches the biometric information with a registered biometric information in parallel with the process of the first determination apparatus 300A. The second determination apparatus 300C executes the determination process based on a determination result by the first determination apparatus 300A and a matching result by the matching apparatus 300B. According to the present example embodiment, a person can be permitted at an appropriate timing to pass through a gate while the person is moving.

### [Modified Example Embodiment]

Although the present invention has been described above with reference to the example embodiments, the present invention is not limited to the example embodiments described above. Various modifications that can be understood by those skilled in the art can be made to the configuration and details of the present invention within the scope not departing from the spirit of the present invention. For example, it should be understood that an example embodiment in which a configuration of a part of any of the example embodiments is added to another example embodiment or replaced with a configuration of a part of another example embodiment is an example embodiment to which the present invention may be applied.

In example embodiment described above, a case where the tracking unit 12 tracks a person by determining whether or not the person is the same person among a plurality of captured images based on the position of the person in the image has been described. But this isn't the only way to track persons. For example, the tracking unit 12 may track the person by determining whether or not the person is the same person by matching the biometric information among a plurality of captured images. In this case, the face image is sent to a matching engine (the second processing group G2) of the management server 10, and matching score returned from matching engine may be used.

In example embodiment described above, the gate control unit 19 outputs a gate opening/closing signal based on the result of the determination process performed by the gate opening/closing determination unit 18, but the determination may be performed by further combining other conditions. For example, the gate control unit 19 may control the opening and closing of the gate based on the result of the determination process in the gate opening/closing determination unit 18 and the identification information acquired from a medium (e.g., an IC card for authentication) held by the person.

The scope of the example embodiments also includes a processing method that stores, in a storage medium, a program that causes the configuration of each of the example embodiments to operate so as to implement the function of each of the example embodiments described above, reads the program stored in the storage medium as a code, and executes the program in a computer. That is, the scope of each of the example embodiments also includes a computer readable storage medium. Further, each of the example embodiments includes not only the storage medium in which the program described above is stored but also the program itself.

As the storage medium, for example, a floppy (registered trademark) disk, a hard disk, an optical disk, a magneto-optical disk, a CD-ROM, a magnetic tape, a nonvolatile memory card, or a ROM can be used. Further, the scope of each of the example embodiments includes an example that operates on OS to perform a process in cooperation with another software or a function of an add-in board without being limited to an example that performs a process by an individual program stored in the storage medium.

The whole or part of the example embodiments disclosed above can be described as, but not limited to, the following supplementary notes.

### (Supplementary Note 1)

An information processing apparatus comprising:
a detection unit that detects biometric information of a person from a captured image being input;
a first determination unit that determines, based on the captured image, whether or not a condition for starting a determination process of whether or not the person is permitted to pass through a gate is satisfied;
a matching unit that matches the biometric information with a registered biometric information in parallel with the process of the first determination unit; and
a second determination unit that executes the determination process based on a determination result by the first determination unit and a matching result by the matching unit.

### (Supplementary Note 2)

The information processing apparatus according to supplementary note 1, further comprising a tracking unit that tracks the person over a plurality of the captured images,
wherein the second determination unit executes the determination process based on the determination result and the matching result of the person tracked by the tracking unit.

### (Supplementary Note 3)

The information processing apparatus according to supplementary note 2, wherein the tracking unit tracks the person by determining whether or not the person is matched among the plurality of captured images based on the position of the person in the captured image.

### (Supplementary Note 4)

The information processing apparatus according to supplementary note 2, wherein the tracking unit tracks the person by performing matching of the biometric information among the plurality captured images and determining whether or not the person is matched.

### (Supplementary Note 5)

The information processing apparatus according to any one of supplementary notes 1 to 4, wherein the condition is set based on a body size which is a size or length of a predetermined body part of the person in the captured image.

### (Supplementary Note 6)

The information processing apparatus according to supplementary note 5, wherein the body size is distance between the two eyes of the person.

### (Supplementary Note 7)

The information processing apparatus according to supplementary note 5 or 6, wherein the first determination unit determines that the condition is satisfied for a target person whose body size is largest among a plurality of the persons included in a predetermined determination area set in the captured image and the body size is equal or larger than a threshold.

### (Supplementary Note 8)

The information processing apparatus according to supplementary note 1, further comprising a selection unit that selects the biometric information for matching from among a plurality of pieces of the biometric information detected by the detection unit, based on at least one of direction, sharpness, brightness, and display area of the feature extraction portion of the person in the biometric information, and outputs the selected biometric information to the matching unit.

### (Supplementary Note 9)

The information processing apparatus according to any one of supplementary notes 1 to 8, wherein the detection unit detects the biometric information of the person included in a predetermined detection area in the captured image, and
wherein the first determination unit determines, in a predetermined determination area set inside the detection area, whether or not the person satisfies the condition.

### (Supplementary Note 10)

The information processing apparatus according to any one of supplementary notes 1 to 9, wherein the second determination unit permits the person to pass through the gate when a first time at which the matching unit acquires the matching result indicating matching is within a certain time period from a second time at which the first determination unit determines that the condition is satisfied.

### (Supplementary Note 11)

The information processing apparatus according to any one of supplementary notes 1 to 10, further comprising a gate control unit that controls opening and closing of the gate based on the result of the determination process.

### (Supplementary Note 12)

The information processing apparatus according to supplementary note 11, wherein the gate control unit controls opening and closing of the gate based on the result of the determination process and identification information acquired from a medium held by the person.

### (Supplementary Note 13)

The information processing apparatus according to supplementary note 7, further comprising a display control unit displays the target person on a display device.

### (Supplementary Note 14)

The information processing apparatus according to any one of supplementary notes 1 to 13, wherein the biometric information is a face image of the person or a feature amount extracted from the face image.

### (Supplementary Note 15)

A terminal device comprising:
a detection unit that detects biometric information of a person from a captured image being input;
a first output unit that outputs the biometric information to a matching apparatus that matches the biometric information with a registered biometric information;
a determination unit that determines, based on the captured image, whether or not a condition for starting a determination process of whether or not the person is permitted to pass through a gate is satisfied; and
a second output unit that outputs a determination result to a determination apparatus that executes the determination process based on the determination result by the determination unit and a matching result by a matching apparatus executed in parallel with the process of the determination unit.

### (Supplementary Note 16)

An information processing system comprising:
a first determination apparatus that detects biometric information of a person from a captured image being input and determines, based on the captured image, whether or not a condition for starting a determination process of whether or not the person is permitted to pass through a gate is satisfied;
a matching apparatus that matches the biometric information with a registered biometric information in parallel with the process of the first determination apparatus; and
a second determination apparatus that executes the determination process based on a determination result by the first determination apparatus and a matching result by the matching apparatus.

### (Supplementary Note 17)

An information processing method comprising:
detecting biometric information of a person from a captured image being input;
executing a condition determining process of determining, based on the captured image, whether or not a condition for starting a passage determination process of whether or not the person is permitted to pass through a gate is satisfied;
executing matching process of matching the biometric information with a registered biometric information in parallel with the condition determining process; and
executing the passage determination process based on a result of the condition determining process and a result of the matching process.

### (Supplementary Note 18)

An information processing method comprising:
detecting biometric information of a person from a captured image being input;
outputting the biometric information to a matching apparatus that matches the biometric information with a registered biometric information;
executing a condition determining process of determining, based on the captured image, whether or not a condition for starting a passage determination process of whether or not the person is permitted to pass through a gate is satisfied;
outputting a determination result of the condition determination process to the determination apparatus that executes the passage determination process based on the determination result of the condition determination process and a matching result of the matching process in the matching apparatus, that is executed in parallel with the condition determination process.

### (Supplementary Note 19)

A storage medium storing a program that causes a computer to execute:
detecting biometric information of a person from a captured image being input;
executing a condition determining process of determining, based on the captured image, whether or not a condition for starting a passage determination process of whether or not the person is permitted to pass through a gate is satisfied;
executing matching process of matching the biometric information with a registered biometric information in parallel with the condition determining process; and
executing the passage determination process based on a result of the condition determining process and a result of the matching process.

### [Description of Signs]

- NW: network
- 1,2: walk-through biometric authentication system
- 10: management server
- 11: face detection unit
- 12: tracking unit
- 13: face image selection unit
- 14: trigger determination unit
- 15: storage unit
- 16: feature amount extraction unit
- 17: matching unit
- 18: gate opening/closing determination unit
- 19: gate control unit
- 20: Camera
- 30: gate device
- 40: notification device
- 110: edge terminal
- 120: matching servers
- 130: gate control server
- 151: CPU
- 152: RAM
- 153: ROM
- 154: HDD
- 155: communication I/F
- 156: display device
- 157: input device
- 158: bus line

## Claims

1. An information processing apparatus comprising:
a detection unit that detects biometric information of a person from a captured image being input;
a first determination unit that determines, based on the captured image, whether or not a condition for starting a determination process of whether or not the person is permitted to pass through a gate is satisfied;
a matching unit that matches the biometric information with a registered biometric information in parallel with the process of the first determination unit; and
a second determination unit that executes the determination process based on a determination result by the first determination unit and a matching result by the matching unit.

2. The information processing apparatus according to claim 1, further comprising a tracking unit that tracks the person over a plurality of the captured images,
wherein the second determination unit executes the determination process based on the determination result and the matching result of the person tracked by the tracking unit.

3. The information processing apparatus according to claim 2, wherein the tracking unit tracks the person by determining whether or not the person is matched among the plurality of captured images based on the position of the person in the captured image.

4. The information processing apparatus according to claim 2, wherein the tracking unit tracks the person by performing matching of the biometric information among the plurality captured images and determining whether or not the person is matched.

5. The information processing apparatus according to any one of claims 1 to 4, wherein the condition is set based on a body size which is a size or length of a predetermined body part of the person in the captured image.

6. The information processing apparatus according to claim 5, wherein the body size is distance between the two eyes of the person.

7. The information processing apparatus according to claim 5 or 6, wherein the first determination unit determines that the condition is satisfied for a target person whose body size is largest among a plurality of the persons included in a predetermined determination area set in the captured image and the body size is equal or larger than a threshold.

8. The information processing apparatus according to claim 1, further comprising a selection unit that selects the biometric information for matching from among a plurality of pieces of the biometric information detected by the detection unit, based on at least one of direction, sharpness, brightness, and display area of the feature extraction portion of the person in the biometric information, and outputs the selected biometric information to the matching unit.

9. The information processing apparatus according to any one of claims 1 to 8, wherein the detection unit detects the biometric information of the person included in a predetermined detection area in the captured image, and
wherein the first determination unit determines, in a predetermined determination area set inside the detection area, whether or not the person satisfies the condition.

10. The information processing apparatus according to any one of claims 1 to 9, wherein the second determination unit permits the person to pass through the gate when a first time at which the matching unit acquires the matching result indicating matching is within a certain time period from a second time at which the first determination unit determines that the condition is satisfied.

11. The information processing apparatus according to any one of claims 1 to 10, further comprising a gate control unit that controls opening and closing of the gate based on the result of the determination process.

12. The information processing apparatus according to claim 11, wherein the gate control unit controls opening and closing of the gate based on the result of the determination process and identification information acquired from a medium held by the person.

13. The information processing apparatus according to claim 7, further comprising a display control unit displays the target person on a display device.

14. The information processing apparatus according to any one of claims 1 to 13, wherein the biometric information is a face image of the person or a feature amount extracted from the face image.

15. A terminal device comprising:
a detection unit that detects biometric information of a person from a captured image being input;
a first output unit that outputs the biometric information to a matching apparatus that matches the biometric information with a registered biometric information;
a determination unit that determines, based on the captured image, whether or not a condition for starting a determination process of whether or not the person is permitted to pass through a gate is satisfied; and
a second output unit that outputs a determination result to a determination apparatus that executes the determination process based on the determination result by the determination unit and a matching result by a matching apparatus executed in parallel with the process of the determination unit.

16. An information processing system comprising:
a first determination apparatus that detects biometric information of a person from a captured image being input and determines, based on the captured image, whether or not a condition for starting a determination process of whether or not the person is permitted to pass through a gate is satisfied;
a matching apparatus that matches the biometric information with a registered biometric information in parallel with the process of the first determination apparatus; and
a second determination apparatus that executes the determination process based on a determination result by the first determination apparatus and a matching result by the matching apparatus.

17. An information processing method comprising:
detecting biometric information of a person from a captured image being input;
executing a condition determining process of determining, based on the captured image, whether or not a condition for starting a passage determination process of whether or not the person is permitted to pass through a gate is satisfied;
executing matching process of matching the biometric information with a registered biometric information in parallel with the condition determining process; and
executing the passage determination process based on a result of the condition determining process and a result of the matching process.

18. An information processing method comprising:
detecting biometric information of a person from a captured image being input;
outputting the biometric information to a matching apparatus that matches the biometric information with a registered biometric information;
executing a condition determining process of determining, based on the captured image, whether or not a condition for starting a passage determination process of whether or not the person is permitted to pass through a gate is satisfied;
outputting a determination result of the condition determination process to the determination apparatus that executes the passage determination process based on the determination result of the condition determination process and a matching result of the matching process in the matching apparatus, that is executed in parallel with the condition determination process.

19. A storage medium storing a program that causes a computer to execute:
detecting biometric information of a person from a captured image being input;
executing a condition determining process of determining, based on the captured image, whether or not a condition for starting a passage determination process of whether or not the person is permitted to pass through a gate is satisfied;
executing matching process of matching the biometric information with a registered biometric information in parallel with the condition determining process; and
executing the passage determination process based on a result of the condition determining process and a result of the matching process.
